# EUROPEAN PATENT SPECIFICATION

(11) **EP 0 801 499 B1**
(45) Date of publication and mention of the grant of the patent: **27.10.2004**
(21) Application number: 97105605.6
(22) Date of filing: 04.04.1997
(51) Int. Cl.: H04N 7/14

(54) **Video telephone answering machine**
Bildanrufbeantworter
Répondeur vidéotéléphonique

(30) Priority: 09.04.1996 US 15073
(43) Date of publication of application: 15.10.1997
(73) Proprietor: TEXAS INSTRUMENTS INCORPORATED, Dallas Texas 75265 (US)
(72) Inventor: Rao, Kashipati G., Richardson, Texas 75080 (US)
(74) Representative: Degwert, Hartmut, Dipl.-Phys.

(56) References cited:
- EP-A- 0 689 335
- US-A- 5 412 418
- PATENT ABSTRACTS OF JAPAN vol. 095, no. 004, 31 May 1995 & JP 07 023357 A (CASIO COMPUT CO LTD), 24 January 1995

## Description

### TECHNICAL FIELD OF THE INVENTION

This invention relates generally to data communications and more particularly to a method and system for a video answering machine.

### BACKGROUND OF THE INVENTION

Answering machines are extremely useful devices both in home and business settings. Although the functionality of answering machines have improved dramatically in recent years, due primarily to the digitization of many functions, improvements can still be made.

JP 07 023 357 A is an example of video answering machine, which describes the use of image information during an automatic answering function.

### SUMMARY OF THE INVENTION

The present invention is a method and system for providing a video answering machine which includes a video data recorder for accepting and recording an outgoing video message, an audio data recorder for accepting and recording an outgoing audio message, and data storage for storing said outgoing video message and said outgoing audio message.

Also included in the video answering machine of the present invention is a control module for accepting an incoming call from a caller, for determining a device type associated with the incoming call, for responding to the incoming call using either the outgoing video message or the outgoing audio message in accordance with the associated device type and for accepting either an audio response or a video response from the caller in accordance with said associated device type.

### DESCRIPTION OF THE DRAWINGS

These and other features of the invention that will be apparent to those skilled in the art from the following detailed description of the invention, taken together with the accompanying drawings in which:-
Fig. 1 is a block diagram illustrating a system in accordance with the present invention;
Fig. 2 is a flow diagram illustrating operation of a system in accordance with the present invention; and
Fig. 3 illustrates operation of a call handler module in accordance with the present invention.

### DETAILED DESCRIPTION OF THE INVENTION

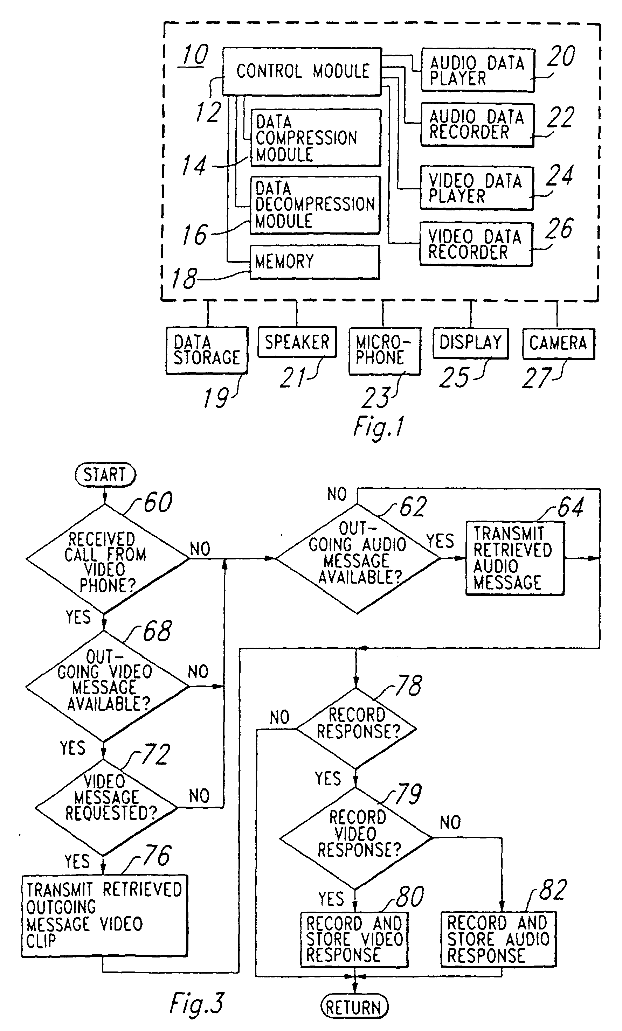

Fig. 1 shows a system in accordance with the present invention. As shown in Fig. 1. processor 10 includes a control module 12, a data compression module 14, a data decompression module 16, a memory 18, an audio data player 20, an audio data recorder 22, a video data player 24, and a video data recorder 26. Also connected to processor 10 is a data storage device 19, a speaker 21, a microphone 23, a display 25 and a camera 27.

Although shown in Fig. 1 as separate components, it is contemplated that two or more of the components shown in Fig. 1 may be integrated into a single device. For example, it is contemplated that a videocapable device such as a video phone may be used to implement several of the functional components of the present invention in Fig. 1. It is also contemplated, for example, that a general purpose digital computer may be used to implement several of the functional components of the present invention as shown in Fig. 1. Those skilled in the art will readily understand other equivalents to the structure illustrated in Fig. 1.

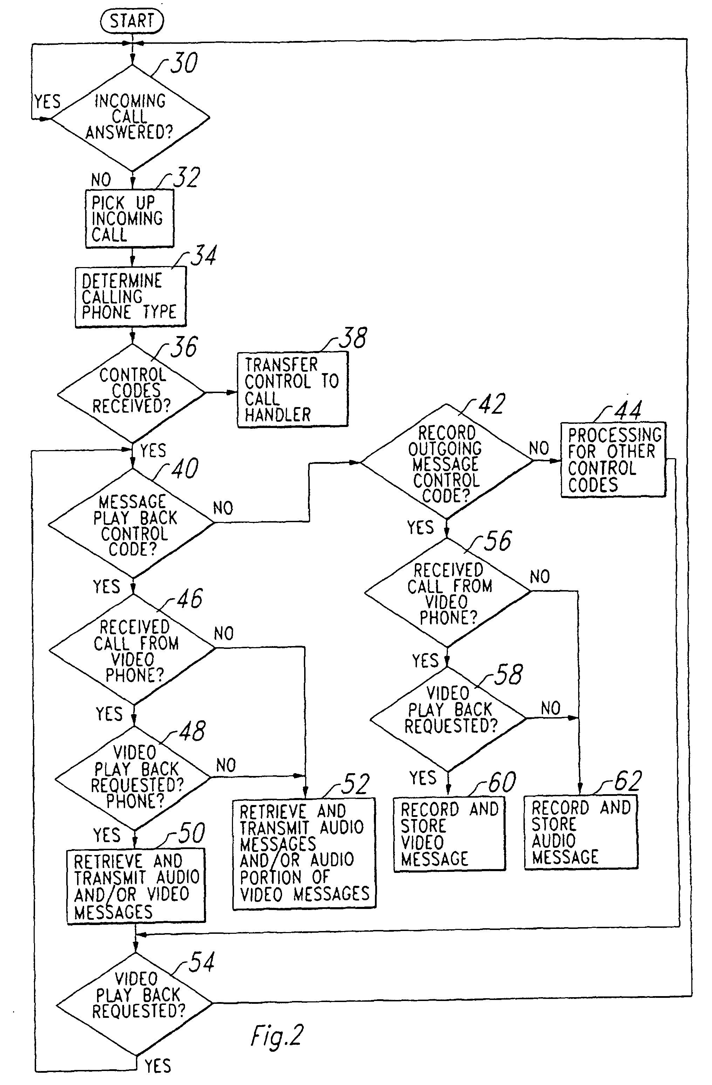

Fig. 2 illustrates operation of the control module 12 shown in Fig. 1. At decision block 30, if an incoming call is not answered, the control module 12 picks up the incoming call as shown at block 32. Then, at block 34, the controller module determines what type of device the incoming call is received from. It is contemplated, for example, that some type of identifying signal is transmitted from the calling device.

In addition to answering and processing incoming calls, the video answering machine in accordance with the present invention is operable to accept and process functional control codes. Thus, at decision block 36, if control codes are not received, processing continues at block 38 where control is transferred to a call handler, the operation of which is shown in Fig. 3 and discussed hereinbelow. If, however, control codes are received at decision block 36. processing continues at decision block 40. The possible control codes include a message playback control code and a record outgoing message control code.

At decision block 40, if the message playback control code is received, and if, at decision block 46, the control module 12 determined that the incoming call was received from a video-capable device, processing continues at decision block 48. At decision block 48, the caller is given the option to receive video playback of recorded messages. This gives the caller the ability to review the recorded messages in private, for security or for time-saving reasons. For example, although the caller is at a video-capable device, the video-capable device may also be viewable by other persons. Or, the video portion of the video-capable device may. be inoperable. Thus, at decision block 48, if video playback is requested, operation continues at block 50 where the recorded messages are retrieved and transmitted to the caller for playback on the video-capable device.

If, at decision block 46, the incoming call is not received from a video-capable capable device or if, at decision block 48, although the device type indicates a video-capable device, video playback is not requested, operation continues at block 52 where only the audio portion of the recorded messages are retrieved and transmitted. Operation then continues at decision block 54 to continue processing other control codes if necessary.

If, at decision block 40, the control code was not the message playback control code, operation continues at decision block 42. If, at decision block 42, the received control code is a record outgoing message control code, and if, at decision block 56, the device type from which the control code was received indicates a video-capable device, operation continues at decision block 58. At decision block 58, although the received call is from a video-capable device, the caller is given the option of recording an audio only message. Thus, if, at decision block 58, the caller chooses to record a video message, operation continues at block 60 where the video message is recorded and stored.

If, at decision block 56, the device type indicates a non-video capable device or if, at decision block 58, the caller elects not to record a video message, operation continues at block 62 where an audio message is recorded and stored.

Fig. 3 is another flow diagram which illustrates operation of the call handling function within the control module 12. As shown at decision block 60, if the incoming call is received from a video-capable device operation continues to decision block 68 where, if an outgoing video message is available, and if, at decision block 72, a video message is requested, control continues to block 76 where the outgoing video message is retrieved and transmitted

If, at decision block 78, the caller elects to record a response, as discussed hereinabove, the caller is given the option at decision block 79 to record a video response, even if calling from a video-capable device, for privacy, security and/or time-saving reasons. If a video response is elected at decision block 79, control continues to block 80 where the video is recorded and stored. Otherwise, an audio response is recorded and at block 82. If no response is chosen at decision block 78 or after recording and storing the audio or video response, operations terminate.

Returning to decision block 60, if the calling device is not a video-capable device, or if, at decision block 68, an outgoing video message is not available, or if, at decision block 72, a video message is not requested, operation continues a decision block 62. If, at decision block 62, an outgoing audio message available, the outgoing video message is retrieved and transmitted at block 64. Otherwise, operation continues at decision block 78 as discussed hereinabove.

Returning to Fig. 1, included in the structure illustrated is a data compression module 14 and a data decompression module 16. These modules are used to compress and decompress, respectively, both video and audio data for storage and for transmission to the calling device. The audio data player 20 is operable to playback audio data through the speaker 21. The video data player 24 is operable to playback video data on the display 25. The audio data recorder 22 controls recording of audio data retrieved from the microphone 23. The video data recorder 26 controls recording of video data retrieved through the camera 27. The data storage 19 is used for long term storage data including the audio and video data discussed hereinabove. The memory 18 serves as short-term storage data including the audio and video data discussed hereinabove.

## Claims

1. A video answering machine comprising:
video data recording means, responsive to a controller means, for accepting and recording an outgoing video message;
audio data recording means, responsive to said controller means, for accepting and recording an outgoing audio message;
data storage means, responsive to said controller means, for storing said outgoing video message and said outgoing audio message;
said controller means being arranged for accepting an incoming call from a caller, for determining a device type associated with said incoming call, for responding to said incoming call using either said outgoing video messag or said outgoing audio message in accordance with said associated device type and for accepting either an audio response or a video response from said caller in accordance with said associated device type;
said data storage means, responsive to said controller means, for storing said audio response and said video response;
video data player means, responsive to said controller means, for retrieving and playing said outgoing video message; and
audio data player means responsive to said controller means, for retrieving and playing said outgoing audio message.

2. The system of Claim 1, wherein said controller means further includes control code processor means for detecting and processing control codes received from said caller.

3. The system of Claim 2, wherein said control code processor means includes message playback means, responsive to said control codes and said associated device type, for retrieving and transmitting either said audio response or said video response to said caller.

4. The system of Claim 2 or Claim 3, wherein said control code processor means includes change outgoing message means, responsive to said control codes and said associated device type, for accepting either a new outgoing audio message or a new outgoing video message from said caller, said data storage means being responsive to said controller means for storing said new outgoing audio message and said new outgoing video message from said caller.

5. The system of any preceding claim further comprising; data compression means responsive to said controller means for compressing said outgoing video message or said outgoing audio message or said audio response, or said video response to generate compressed data before storage.

6. The system of any preceding claim further comprising; data decompression means, responsive to said controller means, for decompressing said compressed data retrieved from said data storage.

7. A method for providing a video answering means comprising the steps of:
providing a video data recording means responsive to a controller means, said video data recording means operable to accept and record an outgoing video message;
providing an audio data recording means responsive to said controller means, said audio data recording means operable to accept and record an outgoing audio message;
providing a data storage means responsive to said controller means, said data storage means operable to store said outgoing video message and said outgoing audio message;
providing said controller means operable to accept an incoming call from a caller, to determine a device type associated with said incoming call, to respond to said incoming call using either said outgoing video message or said outgoing audio message in accordance with said associated device type, and to accept either an audio response or a video response from said caller in accordance with said associated device type;
providing said data storage means responsive to said controller means, said data storage means operable to store said audio response and said Video response;
providing a video data player means responsive to said controller means, said video data player means operable to retrieve and play said outgoing video message; and
providing an audio data player means responsive to said controller means, said audio data player means operable to retrieve and play said outgoing audio message.

## Patentansprüche

1. Video-Anrufbeantworter, mit:
Videodaten-Aufzeichnungsmitteln, die in Reaktion auf Steuermittel eine abgehende Videonachricht annehmen und aufzeichnen;
Audiodaten-Aufzeichnungsmitteln, die in Reaktion auf die Steuermittel eine abgehende Audionachricht annehmen und aufzeichnen;
Datenspeichermitteln, die in Reaktion auf die Steuermittel die abgehende Videonachricht und die abgehende Audionachricht speichern;
wobei die Steuermittel so beschaffen sind, dass sie einen ankommenden Anruf von einem Anrufer annehmen, um einen dem ankommenden Anruf zugeordneten Vorrichtungstyp zu bestimmen, um auf den ankommenden Anruf unter Verwendung entweder der abgehenden Videonachricht oder der abgehenden Audionachricht in Übereinstimmung mit dem zugeordneten Vorrichtungstyp zu antworten und um entweder eine Audioantwort oder eine Videoantwort von dem Anrufer entsprechend dem zugeordneten Vorrichtungstyp anzunehmen;
wobei die Datenspeichermittel in Reaktion auf die Steuermittel die Audioantwort und die Videoantwort speichern;
Videodaten-Abspielmitteln, die in Reaktion auf die Steuermittel die abgehende Videonachricht wiedergewinnen und abspielen; und
Audiodaten-Abspielmitteln, die in Reaktion auf die Steuermittel die abgehende Audionachricht wiedergewinnen und abspielen.

2. System nach Anspruch 1, bei dem die Steuermittel ferner Steuercodeverarbeitungsmittel umfassen, die Steuercodes, die von dem Anrufer empfangen werden, erfassen und verarbeiten.

3. System nach Anspruch 2, bei dem die Steuercodeverarbeitungsmittel Nachrichtenwiedergabemittel umfassen, die in Reaktion auf die Steuercodes und den zugeordneten Vorrichtungstyp entweder die Audioantwort oder die Videoantwort wiedergewinnen und an den Anrufer übertragen.

4. System nach Anspruch 2 oder Anspruch 3, bei der die Steuercodeverarbeitungsmittel Mittel zum Ändern der abgehenden Nachricht umfassen, die in Reaktion auf die Steuercodes und den zugeordneten Vorrichtungstyp entweder eine neue abgehende Audionachricht oder eine neue abgehende Videonachricht von dem Anrufer annehmen, wobei die Datenspeichermittel in Reaktion auf die Steuermittel die neue abgehende Audionachricht und die neue abgehende Videonachricht von dem Anrufer speichern.

5. System nach einem vorhergehenden Anspruch, ferner mit Datenkompressionsmitteln, die in Reaktion auf die Steuermittel die abgehende Videonachricht oder die abgehende Audionachricht oder die Audioantwort oder die Videoantwort komprimieren, um vor der Speicherung komprimierte Daten zu erzeugen.

6. System nach einem vorhergehenden Anspruch, ferner mit Datendekompressionsmitteln, die in Reaktion auf die Steuermittel die aus dem Datenspeicher wiedergewonnen komprimierten Daten dekomprimieren.

7. Verfahren für die Schaffung eines Video-Anrufbeantworters, das die folgenden Schritte umfasst:
Vorsehen von Videodaten-Aufzeichnungsmitteln, die in Reaktion auf Steuermittel so betreibbar sind, dass sie eine abgehende Videonachricht annehmen und aufzeichnen;
Vorsehen von Audiodaten-Aufzeichnungsmitteln, die in Reaktion auf die Steuermittel so betreibbar sind, dass sie eine abgehende Audionachricht annehmen und aufzeichnen;
Vorsehen von Datenspeichermitteln, die in Reaktion auf die Steuermittel so betreibbar sind, dass sie die abgehende Videonachricht und die abgehende Audionachricht speichern;
Vorsehen, dass die Steuermittel so betreibbar sind, dass sie einen ankommenden Anruf von einem Anrufer annehmen, um einen dem ankommenden Anruf zugeordneten Vorrichtungstyp zu bestimmen, um auf den ankommenden Anruf unter Verwendung entweder der abgehenden Videonachricht oder der abgehenden Audionachricht entsprechend dem vorgegebenen Vorrichtungstyp zu antworten und um entweder eine Audioantwort oder eine Videoantwort von dem Anrufer entsprechend dem zugeordneten Vorrichtungstyp anzunehmen;
Vorsehen, dass die Datenspeichermittel so betreibbar sind, dass sie in Reaktion auf die Steuermittel die Audioantwort und die Videoantwort speichern;
Vorsehen von Videodaten-Abspielmitteln in Reaktion auf die Steuermittel, wobei die Videodaten-Abspielmittel so betreibbar sind, dass sie die abgehende Videonachricht wiedergewinnen und abspielen; und
Vorsehen von Audiodaten-Abspielmitteln in Reaktion auf die Steuermittel, wobei die Audiodaten-Abspielmittel so betreibbar sind, dass sie die abgehende Audionachricht wiedergewinnen und abspielen.

## Revendications

1. Répondeur vidéo comprenant:
des moyens d'enregistrement de données vidéo, aptes à répondre à des moyens formant contrôleur, pour accepter et enregistrer un message vidéo sortant;
des moyens d'enregistrement de données audio aptes à répondre auxdits moyens formant contrôleur pour accepter et enregistrer un message audio sortant;
des moyens de mémoire de données, aptes à répondre auxdits moyens formant contrôleur, pour mémoriser ledit message vidéo sortant et ledit message audio sortant;
lesdits moyens formant contrôleur étant agencés pour accepter un appel arrivant d'une personne qui appelle, pour la détermination d'un type de dispositif associé audit appel arrivant, pour répondre audit appel arrivant en utilisant soit ledit message vidéo sortant, soit ledit message audio sortant en fonction du dispositif associé et pour accepter soit une réponse audio, soit une réponse vidéo en provenance de la personne qui appelle conformément audit type de dispositif associé;
lesdits moyens de mémoire de données étant aptes à répondre auxdits moyens formant contrôleur pour mémoriser ladite réponse audio et ladite réponse vidéo;
des moyens formant lecteur de données vidéo aptes à répondre auxdits moyens formant contrôleur pour récupérer et lire ledit message vidéo sortant; et
des moyens formant lecteur de données audio, aptes à répondre auxdits moyens formant contrôleur pour récupérer et lire ledit message audio sortant.

2. Système selon la revendication 1, dans lequel lesdits moyens formant contrôleur comprennent en outre des moyens formant processeur de codes de commande pour détecter et traiter des codes de commande reçus en provenance de ladite personne qui appelle.

3. Système selon la revendication 2, dans lequel lesdits moyens formant processeur de codes de commande incluent des moyens de lecture de message, aptes à répondre auxdits codes de commande et audit type de dispositif associé, pour récupérer et transmettre ladite réponse audio ou ladite réponse vidéo à ladite personne qui appelle.

4. Système selon la revendication 2 ou la revendication 3, dans lequel lesdits moyens formant processeur de codes de commande incluent des moyens de modification du message sortant, aptes à répondre auxdits codes de commande et audit type de dispositif associé, pour accepter soit un nouveau message audio sortant, soit un nouveau message vidéo sortant en provenance de ladite personne qui appelle, lesdits moyens de mémoire de données étant aptes à répondre auxdits moyens formant contrôleur pour mémoriser ledit nouveau message audio sortant et ledit nouveau message vidéo sortant en provenance de ladite personne qui appelle.

5. Système selon l'une quelconque des revendications précédentes, comprenant en outre: des moyens de compression de données aptes à répondre auxdits moyens formant contrôleur pour comprimer ledit message vidéo sortant ou ledit message audio sortant ou ladite réponse audio ou ladite réponse vidéo pour produire des données comprimées avant mémorisation.

6. Système selon l'une quelconque des revendications précédentes, comprenant en outre: des moyens de décompression de données, aptes à répondre auxdits moyens formant contrôleur, pour décomprimer lesdites données comprimées récupérées à partir de ladite mémoire de données.

7. Procédé pour fournir des moyens de réponse vidéo, comprenant les étapes consistant à:
prévoir des moyens d'enregistrement de données vidéo aptes à répondre à des moyens formant contrôleur, lesdits moyens d'enregistrement de données vidéo pouvant agir de manière à accepter et enregistrer un message vidéo sortant;
prévoir des moyens d'enregistrement de données audio aptes à répondre auxdits moyens formant contrôleur, lesdits moyens d'enregistrement de données audio pouvant agir de manière à accepter et enregistrer un message audio sortant;
prévoir des moyens de mémoire de données aptes à répondre auxdits moyens formant contrôleur, lesdits moyens de mémoire de données pouvant agir de manière à mémoriser ledit message vidéo sortant et ledit message audio sortant;
prévoir lesdits moyens formant contrôleur pouvant agir de manière à accepter un appel arrivant provenant d'une personne qui appelle, déterminer un type de dispositif associé audit appel arrivant, répondre audit appel arrivant en utilisant soit ledit message vidéo sortant, soit ledit message audio sortant en fonction dudit type de dispositif associé, et accepter soit une réponse audio soit une réponse vidéo provenant de ladite personne qui appelle, en fonction dudit dispositif associé;
prévoir lesdits moyens de mémoire de données en réponse auxdits moyens formant contrôleur, lesdits moyens de mémoire de données pouvant agir de manière à mémoriser ladite réponse audio et ladite réponse vidéo;
prévoir des moyens formant lecteur de données vidéo aptes à répondre auxdits moyens formant contrôleur, lesdits moyens de lecture de données vidéo pouvant agir de manière à récupérer et lire ledit message vidéo sortant; et
prévoir des moyens formant lecteur de données audio aptes à répondre auxdits moyens formant contrôleur, lesdits moyens de lecture de données audio pouvant agir de manière à récupérer et lire ledit message audio sortant.
